# EUROPEAN PATENT APPLICATION

(11) **EP 3 225 090 A1**
(43) Date of publication of application: **04.10.2017**
(21) Application number: 17163261.5
(22) Date of filing: 28.03.2017
(51) Int. Cl.: A01C 1/00, F26B 3/30

(54) **DEVICE FOR SEED DRYING**

(30) Priority: 28.03.2016 ES 201630379
(71) Applicant: Sánchez Távora, Eugenio José, 41020 Sevilla (ES)
(72) Inventor: Sánchez Távora, Eugenio José, 41020 Sevilla (ES)
(74) Representative: Pons Ariño, Angel

(57) **Abstract**

Device for drying seeds, in order to reduce their moisture content and, thus, improve their preservation conditions, wherein said reduction is based on the application of electromagnetic energy originating from the far-infrared region. The device comprises a hollow drum (1), with a horizontal axis (2) and an essentially cylindrical geometry, which rotates around said axis (2), with legs (3) and an opening (4) covered by an openable lid (5). The hollow interior of the drum (1) incorporates a horizontal support structure (7), which, in turn, comprises an upper side (8), with an essentially pyramidal geometry, and a flat lower side, wherein an emitter (9) that emits electromagnetic energy in the far-infrared region is placed.

## Description

### OBJECT OF THE INVENTION

The present invention is framed within the technical field of equipment designed for treating seeds prior to sowing, planting or food use, as well as within that of drying processes for solid materials or objects without the use of heat, and, in particular, it relates to a device for desiccating seeds, and thus improve their preservation conditions, which uses far-infrared technology to reduce their moisture content.

### BACKGROUND OF THE INVENTION

During their storage, seeds undergo a deterioration process that causes a decrease in their longevity and viability. Said deterioration takes place due to the damages suffered by their membranes, both the cell membranes and those of their intracellular organelles (mitochondria, plastids, etc.), which affect, amongst others, the enzymatic activity, the synthesis or metabolism of proteins, glucosides and lipids, and cellular respiration.

Factors such as high temperatures, sunlight, insects, and bacterial and fungal diseases negatively affect the longevity of seeds, and in some cases may even cause a total loss of their viability. The storage of fruits prior to the extraction of the seeds is a critical period for some species, primarily those with fleshy fruits, wherein a "heating" of the fruits and the seeds may take place when they are stored at room temperature or even in refrigeration chambers. Following this heating, saprophytic fungi may end up ruining the quality of the batch of seeds.

When the seeds have a high moisture content, of about 30%, they germinate quickly. Within the range between 18% and 30%, heating may take place as a result of the activity of microorganisms in the presence of oxygen, causing a quick death of the seeds. Therefore, the seeds must be dried, as quickly as possible, to reach moisture contents below 10%-13%, and be preserved at these levels during the entire storage process.

Seed desiccation is traditionally performed by leaving the seeds exposed to sunlight, such that the latter reduces their moisture content, with the main disadvantage that they are also exposed to rodents, birds, and inclement weather conditions. Moreover, they are exposed to solar energy bands, such as the ultraviolet and near-infrared bands, that may burn the seeds.

As regards drying with dry air, primarily by means of convection, said air streams may cause external roasting of the seeds if the temperature is not properly controlled, in addition to requiring high energy consumption.

On the other hand, infrared radiation is a type of electromagnetic and thermal radiation, which has a longer wavelength and a higher frequency than those of visible light, and is emitted by any body with a temperature greater than 0 Kelvin, i.e. -273.15 degrees Celsius (absolute zero). Far-infrared is the type of electromagnetic radiation within the infrared spectrum that has the longest wavelengths, and is located between the mid-infrared region and radio waves. It is not visible to the naked eye, such that it is necessary to use filter systems and special lenses in order to visualise it. Far-infrared waves transfer heat upon coming in contact with an object and, moreover, have the capacity to penetrate the surface of almost all organic materials.

The use of far-infrared technologies for drying seeds is very advantageous, since far-infrared radiation penetrates bodies, causing drying from the interior thereof, with easy-to-control parameters and a much lower energy consumption, which makes it possible to obtain optimal maintenance of the seeds both for cultivation and food use.

### DESCRIPTION OF THE INVENTION

The object of the invention consists of a device for reducing the moisture content of seeds and thus improve their preservation conditions, wherein said reduction in moisture is based on the application of electromagnetic energy originating from the far-infrared region.

To this end, the device is composed of a drum with a horizontal axis, which rotates around said fixed horizontal axis. The seeds are introduced into the interior of said drum through an opening, preferably made on the lateral surface thereof, where they are subjected to radiation with electromagnetic energy from the far-infrared region, which originates from an emitter, preferably located on the fixed axis of the device.

The drum is preferably made of micro-perforated sheets, which, on the one hand, facilitates the exit of the dry humid air originating from the drying of the seeds contained in the interior and, on the other hand, makes it possible to generate convection streams inside the drum. The synergetic combination of said streams with the infrared energy facilitates and accelerates the drying process.

A control system determines the rotational speed of the drum, as well as the radiation emitted by the emitter, on the basis of temperature and moisture parameters determined in the interior of said drum. Moreover, a set of stirring blades is proposed, designed to facilitate the stirring of the seeds or grains contained in the drum, such that they may all be uniformly treated.

It is also foreseen that the devices incorporate control systems equipped with real-time analysers, preferably continuous analysers, for the temperature and the moisture of the seeds contained inside the drum, which may also be used to programme and control the drying process, such that they may be programmed to desiccate at an optimal temperature depending on the type of product, as well as control the moisture. This continuous measurement of the moisture content makes it possible, in the first place, to determine the initial degree of moisture, as well as to programme the desired degree of moisture from the exterior, such that the process will conclude when this degree has been reached.

Horizontal-axis devices may reach load capacities of up to 10,000 kg, and may also be scaled for smaller quantities, which allows them to be used as portable equipment that may be easily transported in any type of vehicle, thereby allowing for the transport thereof to hard-to-access areas.

The device may operate both with alternating current, typical of conventional electricity distribution networks, and with direct current, supplied by a battery or generator. Due to its low energy consumption, the device facilitates drying of the seeds and, consequently, an optimal preservation thereof, for smallholder farmers with limited resources, who are able to treat them in such a way that their losses are drastically reduced and the added value of their products are significantly increased.

### DESCRIPTION OF THE DRAWINGS

In order to supplement the description being made, and to contribute to a better understanding of the characteristics of the invention, according to a preferred embodiment thereof, a set of drawings is attached to said description as an integral part thereof, where the following is represented for illustrative, nonlimiting purposes:
Figure 1.- Shows a perspective view of the front part of the portable device for the drying of seeds, in a loading position, wherein its main constituent elements may be observed.
Figure 2.- Shows a perspective view of the rear part of the device.
Figure 3.- Shows an upper perspective view of the device, wherein a part of the casing of the drum has been eliminated, in order to show its internal elements.
Figure 4.- Shows a lower perspective view of the device, wherein the casing of the drum has been eliminated, in order to show its internal elements.

### PREFERRED EMBODIMENT OF THE INVENTION

With the aid of the aforementioned figures, below we provide a detailed description of a preferred embodiment of the object of the present invention.

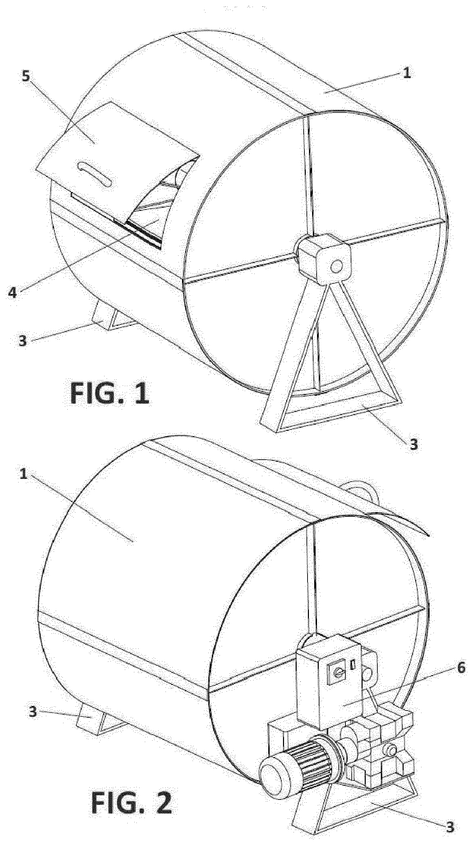

The portable device for drying seeds being described is made up of a hollow rotating drum (1), with an essentially cylindrical geometry and a fixed horizontal axis (2), which is raised from the ground level by means of a pair of legs (3) located at the bases thereof, as may be observed in Figure 1.

The lateral surface of the drum (1), which is micro-perforated, has an opening (4) through which the interior may be accessed, said opening (4) having, in the preferred embodiment described herein, an essentially rectangular geometry. The opening (4) is covered by an openable lid (5), whose geometry and dimensions essentially coincide with those of said opening (4).

The drum (1) moves rotationally around its fixed horizontal axis (2) on the basis of the orders received from a control system (6), which, as illustrated in Figure 2, is placed on one of the bases of said drum (1).

The hollow interior of the drum (1) has a support structure (7) with an essentially rectangular geometry and dimensions that, in the case of the larger sides, essentially coincide with those of the height of the cylinder that forms the drum (1) and, in the case of the smaller sides, are smaller than those of the diameter of the bases of said drum (1).

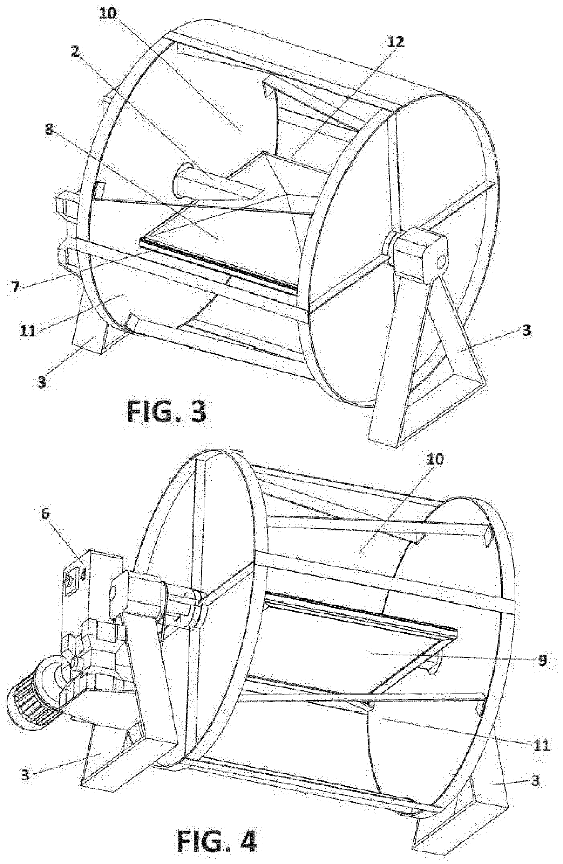

As may be observed in Figures 3 and 4, the support structure (7) is placed in a horizontal position that coincides with the rotation axis (2) of the drum (1), and is connected to said fixed axis (2). This support structure (7) comprises an upper side (8), with an essentially pyramidal geometry, and a flat lower side wherein an emitter (9) device (9) that emits electromagnetic energy in the far-infrared region, which hits the surface beneath said emitter (9) perpendicularly, is placed.

The horizontal placement of the support structure (7), connected to the axis (2) of the drum (1), divides the internal hollow space of said drum (1) into two halves, an upper half, or loading space (10), and a lower half, or drying space (11). The loading space (10) and the drying space (11) are connected to one another through a set of grooves (12) defined on the long sides of the support structure (7) and the internal side of the lateral surface of the drum (1). Said grooves (12) are created due to the difference in length between the smaller sides of said support structure (7) and the diameters of the bases of the drum (1).

The seed drying process that uses the device thus described begins with a pre-heating phase, wherein the control system (6) sends an order to the emitter (9) such that it may begin to irradiate energy in the far-infrared region, with the drum (1) being empty and stationary.

Once the interior of the drum (1) has reached certain pre-determined temperature conditions, the control system emits a signal that is received by an operator, such that the latter may open the lid (5) of the opening (4) and manually introduce, by means of a blade or similar loading element, the seeds to be dried.

Said seeds go through the opening (4) and are introduced into the loading space, (10) hitting the upper side (8) of the support structure (7), wherefrom, due to the pyramidal structure of said upper side (8), they slide, as a result of gravity, towards the lateral ends of the support structure (7). The seeds go over said ends and progressively fall into the drying space (11) through the grooves (12).

Once the maximum load capacity of said drying space (11) has been reached, the control system (6) emits a new signal, which notifies the operator to end the loading process and close the lid (5) of the lateral opening (4) of the drum (1). The device for drying seeds described in the present preferred embodiment and the attached figures has a maximum load capacity of 150 kg of seeds; for this reason, it may be considered to have small dimensions and, therefore, to be easily portable.

The next phase begins with the irradiation, by the emitter (9), of the first layer of seeds, located on the upper area of the drying space (11). Once said first layer of seeds has reached the optimal temperature and moisture content for desiccation, the control system (6) emits an order to the drum (1), such that it may rotate around its axis (2). The seeds stir with said rotation of the drum (1) and change their position inside the drying space (11), such that a new layer of seeds replaces the layer that has been previously desiccated.

The option of incorporating stirring blades, not represented in the attached figures, is considered, in order to facilitate optimal stirring of said seeds.

The irradiation-rotation cycle is successively repeated until the control system (6) determines that all the seeds introduced have been adequately desiccated, and are under optimal conditions for storage. At this time, said control system sends a signal to the emitter (9), such that it may cease to irradiate and stop the rotation of the drum (1), in a position wherein the opening (4) of the drum (1) is in the lower position, facing the drying space (11). Moreover, it sends a signal to the operator, to indicate that the dehydration of the seeds has already been completed.

With the drum (1) in said position, the operator opens the lid (5), such that the already-desiccated seeds may fall through the opening (4) as a result of gravity.

A second preferred embodiment of the invention incorporates an analyser device to the control system (6), not represented in the attached figures, which determines, in real time, the temperature and moisture parameters of the seeds contained in the drying space (11). In this way, it is possible to determine both the initial degree of moisture of the seeds and the degree that they have reached at any given moment, thereby making it possible to optimise the process and conclude it once the pre-determined parameters have been reached.

## Claims

1. Device for drying seeds, made up of:
- a hollow drum (1) with a horizontal axis (2) and an essentially cylindrical geometry, which may move rotationally around said axis (2) and is raised from the ground level by means of legs (3), the lateral surface whereof has at least one opening (4) covered by an openable lid (5),
and
- a control system (6) that determines the rotational speed of the drum (1),
**characterised in that** the hollow interior of the drum (1) incorporates a horizontal support structure (7), with an essentially rectangular geometry, which, in turn, comprises:
- an upper side (8), with an essentially pyramidal geometry, and
- a flat lower side, wherein an emitter (9) that emits electromagnetic energy in the far-infrared region is placed.

2. Device for drying seeds according to claim 1, wherein the support structure (7) is placed in a position that coincides with the axis (2) of the drum (1), such that the hollow internal space of said drum is divided into:
- a loading space (10) or upper space, and
- a drying space (11) or lower space.

3. Device for drying seeds according to claim 1, wherein the dimensions of the larger sides of the support structure (7) essentially coincide with those of the height of the cylinder that makes up the drum (1), and the dimensions of the smaller sides are smaller than those of the diameter of the bases of the drum (1).

4. Device for drying seeds according to claims 2 and 3, wherein the loading space (10) and the drying space (11) are connected through grooves (12) defined between the long sides of the support structure (7) and the internal side of the lateral surface of the drum (1).

5. Device for drying seeds according to claim 1, wherein the control system (6) further incorporates an analyser device designed for the real-time determination of the temperature and moisture parameters inside the drying space (11).

6. Device for drying seeds according to claim 1, wherein the drum (1) is made of micro-perforated sheets.
